# EUROPEAN PATENT APPLICATION

(11) **EP 4 672 465 A1**
(43) Date of publication of application: **31.12.2025**
(21) Application number: 24894521.4
(22) Date of filing: 15.11.2024
(51) Int. Cl.: H01M 50/291, H01M 50/204

(54) **BATTERY PACK**

(30) Priority: 20.11.2023 KR 20230160135
(71) Applicant: LG Energy Solution, Ltd., Seoul 07335 (KR)
(72) Inventor: SHIN, Ju Hwan, Daejeon 34122 (KR); JEON, Jong Pil, Daejeon 34122 (KR); HUR, Nam Hoon, Daejeon 34122 (KR); KIM, Min Bum, Daejeon 34122 (KR)
(74) Representative: Plasseraud IP
(86) International application number: PCT/KR2024/018046
(87) International publication number: WO 2025/110628

(57) **Abstract**

Example embodiments of the present invention provide a battery pack. The battery pack includes a pack housing including a base plate and a guide protruding from the base plate, and first and second battery cell assemblies on the base plate, in which each of the first and second battery cell assemblies includes a cell stack including a plurality of battery cells and first and second cross-beams coupled to the cell stack, and the second cross-beam of the first battery cell assembly includes a second assembly window for exposing the guide.

## Description

### [Technical Field]

The present invention relates to a battery pack. The present application claims the benefit of priority based on Korean Patent Application No. 10-2023-0160135, filed on November 20, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present invention is directed to providing a battery pack with improved reliability and assemblability.

### [Technical Solution]

Example embodiments of the present invention provide a battery pack. The battery pack includes a pack housing including a base plate and a guide protruding from the base plate, and first and second battery cell assemblies on the base plate, in which each of the first and second battery cell assemblies includes a cell stack including a plurality of battery cells and first and second cross-beams coupled to the cell stack, and the second cross-beam of the first battery cell assembly includes a second assembly window for exposing the guide.

The first cross-beam of the second battery cell assembly may be coupled to the second cross-beam of the first battery cell assembly.

The first cross-beam of the second battery cell assembly may cover the guide.

The first cross-beam of the second battery cell assembly may include a first assembly window for exposing the guide.

The first assembly window of the first cross-beam of the second battery cell assembly may overlaps the second assembly window of the second cross-beam of the first battery cell assembly.

The first cross-beam of each of the first and second battery cell assemblies may include a first step structure, the second cross-beam of each of the first and second battery cell assemblies may include a second step structure, and a height of the second step structure may be greater than a height of the guide.

The second cross-beam of each of the first and second battery cell assemblies may further include bolting holes, and a shape of the bolting holes may be the same as a shape of the second assembly window.

The second cross-beam of each of the first and second battery cell assemblies may further include bolting holes, and the shape of the bolting holes may be different from the shape of the second assembly window.

A diameter of the bolting holes may be different from a diameter of the second assembly window.

Example embodiments provide a battery pack. The battery pack includes a pack housing including a base plate and guides protruding from the base plate, and a battery cell assembly on the base plate, in which the battery cell assembly includes a cell stack including a plurality of battery cells and first and second cross-beams coupled to the cell stack, the first cross-beam includes first and second vertical ribs and first and second horizontal ribs between the first and second vertical ribs, the second cross-beam includes third and fourth vertical ribs and third and fourth horizontal ribs between the third and fourth vertical ribs, the third horizontal rib includes a third window for exposing a corresponding one of the guides, and the fourth horizontal rib includes a fourth window penetrated by a corresponding one of the guides.

The first cross-beam may cover the guides.

The first horizontal rib of the first cross-beam may include a first window for exposing a corresponding one of the guides.

The second horizontal rib of the first cross-beam may include a second window for exposing a corresponding one of the guides.

### [Advantageous Effects]

A battery pack according to example embodiments of the present invention may include battery cell assemblies each including a cross-beam exposing a guide. Accordingly, the assemblability and reliability of the battery pack may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view of a battery pack according to example embodiments.
FIG. 2 is a plan view of a first cross-beam of battery cell assemblies.
FIG. 3 is a cross-sectional view taken along line 2I-2I' of FIG. 2.
FIG. 4 is a plan view of a first cross-beam of battery cell assemblies.
FIG. 5 is a cross-sectional view taken along line 4I-4I' of FIG. 4.
FIG. 6 illustrates a battery pack according to other example embodiments.
FIG. 7 illustrates a battery pack according to other example embodiments.
FIG. 8 is a plan view of a first cross-beam of each of battery cell assemblies.
FIG. 9 is a cross-sectional view taken along line 8I-8I' of FIG. 8.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

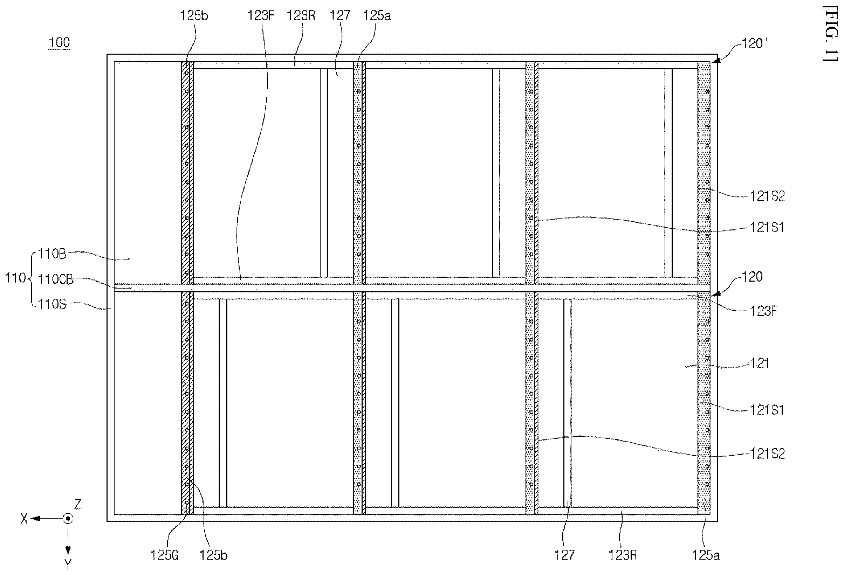

FIG. 1 is a plan view of a battery pack 100 according to example embodiments.

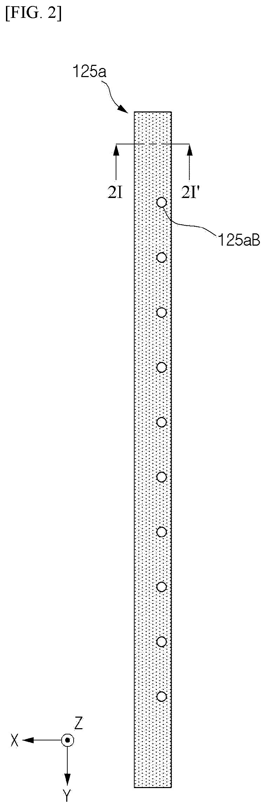

FIG. 2 is a plan view of a first cross-beam 125a of battery cell assemblies 120 and 120'.

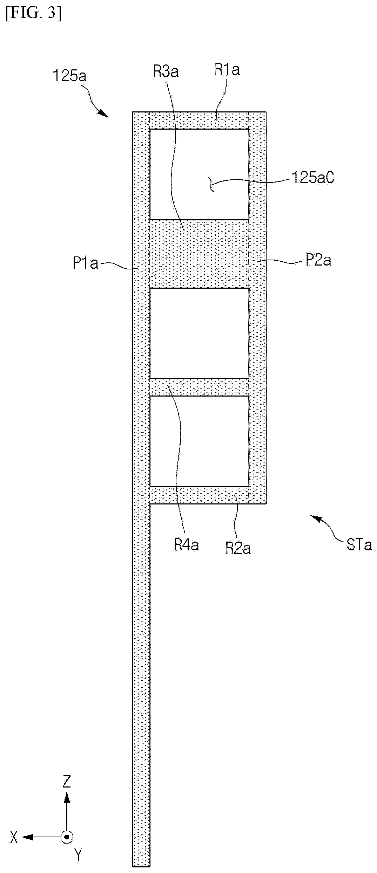

FIG. 3 is a cross-sectional view taken along line 2I-2I' of FIG. 2.

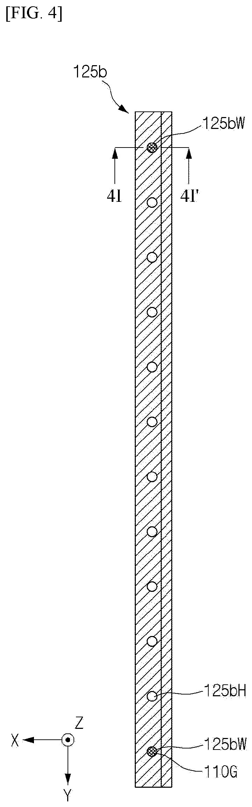

FIG. 4 is a plan view of a first cross-beam 125a of battery cell assemblies 120 and 120'.

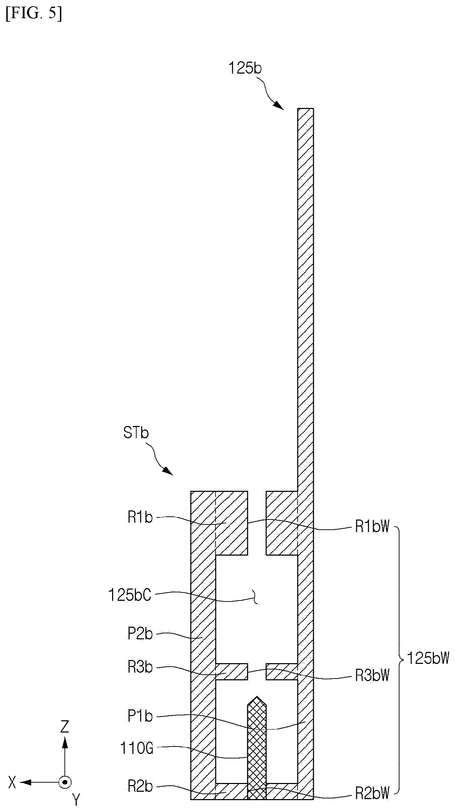

FIG. 5 is a cross-sectional view taken along line 4I-4I' of FIG. 4.

Referring to FIGS. 1 to 5, the battery pack 100 may include a pack housing 120 and the battery cell assemblies 120 and 120'. The battery pack 100 is a final form of a battery system to be mounted on a mobility or the like.

The pack housing 110 may include a base plate 110B, side walls 110S, a cross-beam 110CB, and guides 110G. Here, two directions substantially parallel to a mounting surface of the base plate 110B are defined as an X-axis direction and a Y-axis direction, and a direction substantially perpendicular to the mounting surface of the base plate 110B is defined as a Z-axis direction. The X-axis direction, the Y-axis direction, and the Z-axis direction may be substantially perpendicular to one another.

The base plate 110B may have a flat plate shape. The side walls 110S may be substantially perpendicular to the base plate 110B. The side walls 110S may be adjacent to edges of the base plate 110B. The side walls 110S may be coupled to the edges of the base plate 110B.

The base plate 110B may include a center beam 110CB. The center beam 110CB may be surrounded by the side walls 110S. Accordingly, the center beam 110CB may partition a space defined by the pack housing 110.

Each of the base plate 110B and the side walls 110S may be provided by an extrusion process. The base plate 110B may include a plurality of plates coupled to each other by friction stir welding. The center beam 110CB may be included in one of the plurality of plates of the base plate 110B, formed by the extrusion process, together with one of the plurality of plates of the base plate 110B, or welded to one of the plurality of plates of the base plate 110B.

Each of the guides 110G may protrude from the mounting surface of the base plate 110B. Each of the guides 110G may have a pin shape. Each of the guides 110G may include a pointed end. The guides 110G may be at positions at which the battery cell assemblies 120 and 120' are to be mounted.

The battery cell assemblies 120 may be on the mounting surface of the base plate 110B of the pack housing 110. The battery cell assemblies 120 may be arranged in the X-axis direction. The base plate 110B may support the battery cell assemblies 120. The side walls 110S may horizontally surround the battery cell assemblies 120.

Hereinafter, the technical idea of the present invention will be described with reference to an embodiment in which the battery pack 100 is of a moduleless type and each of the plurality of battery cell assemblies 120 does not include a module frame. However, the above description is intended to provide only a non-limiting example and thus should not be understood as limiting the technical idea of the present invention in any sense. Based on the above description, technicians of ordinary skill in the art will be able to easily derive a plurality of battery cell assemblies each including a module frame and a module type battery pack including the plurality of battery cell assemblies.

Each of the plurality of battery cell assemblies 120 may include a cell stack 121, a front end plate assembly 123F, a rear end plate assembly 123R, a first cross-beam 125a, a second cross-beam 125b, and a flexible flat cable (FFC) assembly 127.

The cell stack 121 may include a plurality of battery cells. The battery cells are basic units of a lithium ion battery, i.e., a secondary battery. The battery cells may each include an electrode assembly, an electrolyte, and a case. Each of the battery cells is classified into a lithium ion battery, a lithium ion polymer battery, a lithium polymer battery, etc. according to a configuration of an electrode assembly and an electrolyte.

Each of the battery cells may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween.

According to example embodiments, the battery cells of the cell stack 121 may form a plurality of banks. The plurality of banks may include one or more battery cells connected in parallel. The plurality of banks may be connected in series to each other. The number of battery cells included in each of the plurality of banks and the number of banks of the cell stack 121 may be determined according to a voltage and a current to be output through the battery cell assembly 120.

According to example embodiments, the cell stack 121 may further include a plurality of separators. The plurality of separators may horizontally support the plurality of battery cells to prevent swelling of the plurality of battery cells. According to example embodiments, the plurality of separators may be thermal barriers. According to example embodiments, each of the plurality of separators may have high melting temperature and low thermal conductivity. According to example embodiments, each of the plurality of separators may include a flame retardant material such as a ceramic and a coated glass material. According to example embodiments, the plurality of separators may be configured to emit a fire retarding material and a fire extinguishing agent when a thermal runaway event occurs.

The first cross-beam 125a and the second cross-beam 125b of each of the battery cell assemblies 120 may be spaced apart from each other with the cell stack 121 interposed therebetween. The first cross-beam 125a and the second cross-beam 125b may cover the cell stack 121. The first cross-beam 125a and the second cross-beam 125b may be fixed to the cell stack 121 via an adhesive material or the like.

The first cross-beam 125a of each of the battery cell assemblies 120 may include vertical ribs P1a and P2a and horizontal ribs R1a, R2a, R3a and R4a. The vertical ribs P1a and P2a may be substantially perpendicular to the X-axis direction. The vertical ribs P1a and P2a may be spaced apart from each other in the X-axis direction. The vertical rib P1a may be in contact with the cell stack 121. The vertical rib P1a may cover a first side surface 121S1 of the cell stack 121. The vertical rib P2a may be spaced apart from the cell stack 121 with the vertical rib P1a interposed therebetween. A length of the vertical rib P1a in the Z-axis direction may be greater than a length of the vertical rib P2a in the Z-axis direction.

The horizontal ribs R1a, R2a, R3a and R4a may be substantially perpendicular to the Z-axis direction. The horizontal ribs R1a, R2a, R3a and R4a may be spaced apart from each other in the Z-axis direction. The horizontal ribs R1a, R2a, R3a and R4a may be interposed between the vertical ribs P1a and P2a. The horizontal ribs R1a, R2a, R3a and R4a may be connected to the vertical ribs P1a and P2a. The horizontal ribs R3a and R4a may be interposed between the horizontal ribs R1a and R2a.

The first cross-beam 125a may include a step structure STa. The vertical rib P2a and the horizontal rib R2a of the first cross-beam 125a may form the step structure STa.

The first cross-beam 125a may include a plurality of bolting holes 125aB. Accordingly, each of the horizontal ribs R1a, R2a, R3a, and R4a may include a plurality of holes overlapping each other, and the overlapping of the plurality of holes of the horizontal ribs R1a, R2a, R3a, and R4a may form the plurality of bolting holes 125aB.

Each of the plurality of bolting holes 125aB may be formed by, for example, drilling or the like and thus may have a roughly circular shape. Each of the plurality of bolting holes 125aB may be formed by a method such as computer numerical control (CNC) processing or laser processing. The plurality of bolting holes 125aB formed by CNC processing or laser processing may have various shapes, e.g., a polygonal shape such as a square shape or a triangle shape, a cross shape and a star shape.

There may be an empty space 125aC between the vertical ribs P1a and P2a and the horizontal ribs R1a, R2a, R3a and R4a. Accordingly, the first cross-beam 125a may be reduced in weight, and the energy density of the battery pack 100 may be improved. The vertical rib P1a may be referred to as a first vertical rib, the vertical rib P2a may be referred to as a second vertical rib, the horizontal rib R1a may be referred to as a first horizontal rib, and the horizontal rib R2a may be referred to as a second horizontal rib.

The second cross-beam 125b of each of the battery cell assemblies 120 may include the vertical ribs P1b and P2b and the horizontal ribs R1b, R2b and R3b. The vertical ribs P1b and P2b may be substantially perpendicular to the X-axis direction. The vertical ribs P1b and P2b may be spaced apart from each other in the X-axis direction. The vertical rib P1b may be in contact with the cell stack 121. The vertical rib P1b may cover a second side surface 121S2 of the cell stack 121. The second side surface 121S2 may be opposite to the first side surface 121S1. The vertical rib P2b may be spaced apart from the cell stack 121 with the vertical rib P1b interposed therebetween. A length of the vertical rib P1b in the Z-axis direction may be greater than a length of the vertical rib P2b in the Z-axis direction.

The horizontal ribs R1b, R2b, and R3b may be substantially perpendicular to the Z-axis direction. The horizontal ribs R1b, R2b, and R3b may be spaced apart from each other in the Z-axis direction. The horizontal ribs R1b, R2b, and R3b may be interposed between the vertical ribs P1b and P2b. The horizontal ribs R1b, R2b, and R3b may be connected to the vertical ribs P1b and P2b. The horizontal rib R3b may be interposed between the horizontal ribs R1b and R2b. A distance between the horizontal rib R1b and the base plate 110B may be greater than a height of the guide 110G. A height of the step structure STb of the second cross-beam 125b may be greater than the height of the guide 110G. Accordingly, the guide 110G may not penetrate the horizontal rib R1b of the second cross-beam 125b. The guide 110G may be spaced apart from the horizontal rib R1b of the second cross-beam 125b. As a non-limiting example, a distance between the horizontal rib R3b and the base plate 110B may be greater than the height of the guide 110G.

The second cross-beam 125b may include a step structure STb. The vertical rib P2b and the horizontal rib R1b of the second cross-beam 125b may form the step structure STb.

The second cross-beam 125b may include a plurality of bolting holes 125bB. Accordingly, each of the horizontal ribs R1b, R2b, and R3b may include a plurality of holes overlapping each other, and the plurality of holes of the horizontal ribs R1b, R2b, and R3b may constitute the plurality of bolting holes 125bB.

The second cross-beam 125b may include assembly windows 125bW. Accordingly, each of the horizontal ribs R1b, R2b, and R3b may include windows Rb1W, Rb2W, and Rb3W that overlap each other. Each of the windows Rb1W and Rb3W may expose a guide pin 110G. The window Rb2W may be penetrated by the guide pin 110G. The assembly windows 125bW may be formed by overlapping the plurality of windows Rb1W, Rb2W, and Rb3W of the horizontal ribs R1b, R2b, and R3b.

The assembly windows 125bW may expose the guides 125G on the base plate 110B. Accordingly, when the battery cell assemblies 120 are mounted on the base plate 110B, pressure (e.g., pressure in the X-axis direction) to be applied to the battery cell assemblies 120 can be accurately determined, and the assemblability of the battery pack 100 can be improved. In addition, a location of each of the battery cell assemblies 120 is determined based on the guides 125G exposed through the assembly windows 125bW to prevent or mitigate cumulative errors that may be caused as the battery cell assemblies 120 are sequentially mounted in the X-axis direction.

Each of the bolting holes 125bB and assembly windows 125bW may be formed by, for example, drilling or the like and thus may have a roughly circular shape. Each of the bolting holes 125bB and the assembly windows 125bW may be formed by a method such as CNC processing or laser processing. Each of the bolting holes 125bB and the assembly windows 125bW formed by CNC processing or laser processing may have various shapes, e.g., a polygonal shape such as a square shape or a triangle shape, a cross shape, and a star shape.

The shape of each of the assembly windows 125bW may be different from the shape of each of the bolting holes 125bB. For example, each of the assembly windows 125bW may have a square shape, and each of the bolting holes 125bB may have a circular shape. As another example, for example, each of the assembly windows 125bW may have a circular shape with a diameter different from a diameter of each of the bolting holes 125bB.

In FIG. 4, the bolting holes 125bB are interposed between the assembly windows 125bW but the positions of the assembly windows 125bW are only an example and the technical idea of the present invention should not be understood as being limited thereby in any sense.

According to example embodiments, the bolting holes 125bB may overlap the bolting holes 125aB. Accordingly, a mechanical fixing means such as a bolt may be coupled to the base plate 110B through the first and second cross-beams 125b that are coupled to each other.

In the present example, the first cross-beam 125a may not include the assembly window 125bW. Accordingly, the first cross-beam 125a may cover the guide 110P. Accordingly, the first cross-beam 125a may not expose the guide 110P. The first cross- beam 125a may overlap the guide 110P in the Z-axis direction.

There may be an empty space 125bC between the vertical ribs P1b and P2b and the horizontal ribs R1b, R2b and R3b. Accordingly, the second cross-beam 125b may be reduced in weight, and the energy density of the battery pack 100 may be improved. The vertical rib P1b may be referred to as a third vertical rib, the vertical rib P2b may be referred to as a fourth vertical rib, the horizontal rib R1b may be referred to as a third horizontal rib, and the horizontal rib R2b may be referred to as a fourth horizontal rib.

A distance between the horizontal rib R3b and the base plate 110B may be greater than a distance between the horizontal rib R2b and the base plate 110B. The distance between the horizontal rib R1b and the base plate 110B may be greater than the distance between the horizontal rib R3b and the base plate 110B. The distance between the horizontal rib R2a and the base plate 110B may be greater than the distance between the horizontal rib R1b and the base plate 110B. The distance between the horizontal rib R4a and the base plate 110B may be greater than the distance between the horizontal rib R2a and the base plate 110B. The distance between the horizontal rib R3a and the base plate 110B may be greater than the distance between the horizontal rib R4a and the base plate 110B. The distance between the rib R1a and the base plate 110B may be greater than the distance between the horizontal rib R3a and the base plate 110B.

The first cross-beam 125a of each of the battery cell assemblies 120 may be coupled to either the second cross-beam 125b of a following battery cell assembly 120 among the battery cell assemblies 120 or a supporting beam of the base plate 110B. The first cross-beam 125a of each of the battery cell assemblies 120 may be coupled to either the second cross-beam 125b of a subsequent battery cell assembly 120 among the battery cell assemblies 120 or a supporting beam of the base plate 110B.

A shape of the step structure STb of the second cross-beam 125b may be complementary to a shape of the step structure STb of the first cross-beam 125a but the present invention is not limited thereto. For example, when the second cross-beam 125b and the first cross-beam 125a are coupled to each other in consideration of an assembly margin and a process margin, there may be a clearance between the first and second cross-beams 125a and 125b.

A lower part of the vertical rib P1a may face the vertical rib P2b, an upper part of the vertical rib P1b may face the vertical rib P2a, and the horizontal rib R2a may face the horizontal rib R1b.

The front end plate assembly 123F and the rear end plate assembly 123R may be coupled to the cell stack 121. The front end plate assembly 123F may include a frame, an integrated circuit, and bus bars. The frame may support the integrated circuit and the bus bars. The frame supports conductive elements to prevent an undesired short circuit between the conductive elements. The bus bars may be external connection terminals for outputting a voltage of the cell stack 121. The rear end plate assembly 123R may include a frame and an integrated circuit.

The integrated circuits of the front end plate assembly 123F and the rear end plate assembly 123R may provide an electrical path for transmitting a voltage and a sensed temperature to the outside such as a battery management system (BMS).

The FFC assembly 127 may be coupled to the front end plate assembly 123F and the rear end plate assembly 123R. The FFC assembly 127 may provide an electrical connection to the front end plate assembly 123F and the rear end plate assembly 123R.

The battery cell assemblies 120' may be on the mounting surface of the base plate 110B of the pack housing 110. The battery cell assemblies 120' may be spaced apart from the battery cell assemblies 120 with the center beam 100CB interposed therebetween. The center beam 100CB may be interposed between the battery cell assemblies 120' and the battery cell assemblies 120.

Each of the battery cell assemblies 120' may include a cell stack 121, a front end plate assembly 123F, a rear end plate assembly 123R, a first cross-beam 125a, a second cross-beam 125b, and an FFC assembly 127.

Each of the battery cell assemblies 120' is the same as each of the battery cell assemblies 120 except positions of the first cross-beam 125a and the second cross-beam 125b. The first cross-beam 125a of each of the battery cell assemblies 120' may be coupled to the second side surface 121S2 of the cell stack 121, and the second cross-beam 125b thereof may be coupled to the first side surface 121S1 of the cell stack 121. Accordingly, the above description of the battery cell assemblies 120 may also apply to the battery cell assemblies 120'.

In the present example, the battery cell assemblies 120 may be sequentially mounted on the pack housing 100 in a +X-axis direction, and the battery cell assemblies 120' may also be sequentially mounted on the pack housing 100 in the +X-axis direction.

The battery pack 100 may include a plurality of exhaust devices. The exhaust devices may be coupled to one of the side walls 110S. The side walls 110S may include an exhaust path connected to the plurality of exhaust devices. The plurality of exhaust devices may be configured to delay thermal propagation by discharging a high-temperature gas from the inside of the battery pack 100 to the outside when at least one of the plurality of battery cell assemblies 120 is in a thermal runaway state.

Here, the thermal runaway state of the battery cell assemblies 120 and 120' is a state in which a change of temperature of the battery cell assemblies 120 and 120' accelerates the change of temperature, i.e., uncontrollable positive feedback. A temperature of the battery cell assemblies 120 and 120' that are in the thermal runaway state sharply increases, and a large amount of a high-pressure gas and combustion debris are discharged.

The battery pack 100 may further include electronic components. The electronic components may be in the pack housing 110. The electronic components may be provided between one of the side walls 110S on which the exhaust devices are installed and the battery cell assemblies 120 and 120'.

The electrical components may include, for example, a BMS. The BMS may be configured to monitor, balance, and control the battery pack 100. The monitoring of the battery pack 100 may include measuring voltages and currents of certain nodes in the battery cell assemblies 120 and 120' and measuring temperatures at set positions in the battery pack 100. The battery pack 100 may include measuring devices for measuring a voltage, a current, and temperature as described above.

The balancing of the battery pack 100 is an operation of reducing a deviation between the battery cell assemblies 120 and 120'. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the battery cell assemblies 120 and 120'.

The electronic components may further include a cooling device, a power relay assembly (PRA), a safety plug, etc. The cooling device may include a cooling fan. The cooling fan may circulate air in the battery pack 100 to prevent overheating of each of the battery cell assemblies 120 and 120'. The PRA may be configured to supply or cut off power from a high-voltage battery to an external load (e.g., a motor of a vehicle). The PRA may cut off power supply to an external load (e.g., a motor of a vehicle) to protect the battery cell assemblies 120 and 120' and the external load, when an abnormal voltage such as a voltage surge occurs.

The battery pack 100 may further include a plurality of inter-bus bars configured to electrically connect the battery cell assemblies 120 and 120'. The battery cell assemblies 120 and 120' may be connected in series by the plurality of inter-bus bars. Accordingly, the battery pack 100 may be configured to output a high voltage to an external load (e.g., a motor of a vehicle).

The battery pack 100 may further include a lead plate coupled to the side walls 110S. The lead plate may cover elements inside the battery pack 100 such as the battery cell assemblies 120 and 120' and the electronic components. The lead plate may be fixed to the battery pack 100 by a mechanical coupling means, e.g., a bolt.

### (Second Embodiment)

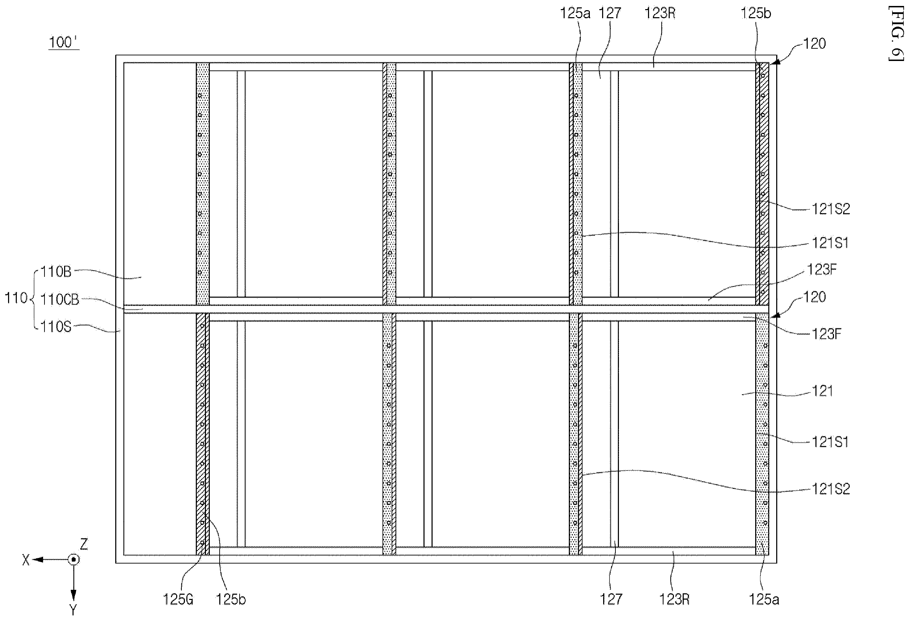

FIG. 6 illustrates a battery pack 100' according to other example embodiments.

Referring to FIG. 6, the battery pack 100' may include a pack housing 110 and a plurality of battery cell assemblies 120 on the pack housing 110.

In the present example, some battery cell assemblies 120 may be sequentially mounted on the pack housing 100 in one direction (e.g., the +X-axis direction), and some battery cell assemblies 120 may be sequentially mounted on the pack housing 100 in an opposite direction (e.g., an -X-axis direction).

### (Third Embodiment)

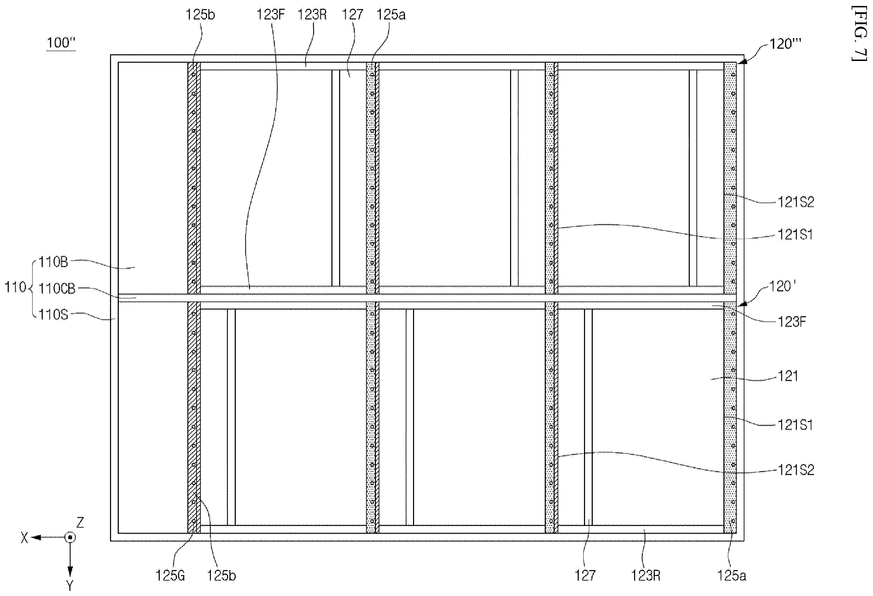

FIG. 7 illustrates a battery pack 100" according to other example embodiments.

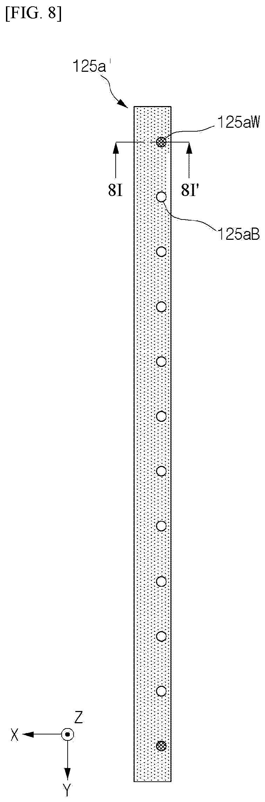

FIG. 8 is a plan view of a first cross-beam 125a' of each of battery cell assemblies 120" and 120"'.

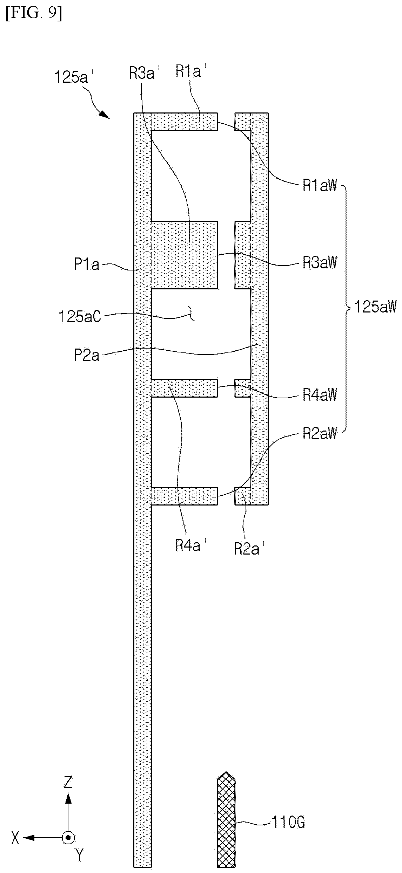

FIG. 9 is a cross-sectional view taken along line 8I-8I' of FIG. 8.

Referring to FIG. 6, the battery pack 100" may include a pack housing 110 and the battery cell assemblies 120" and 120‴ on the pack housing 110.

The battery cell assemblies 120" are substantially the same as the battery cell assembly 120 of FIG. 1 except that the first cross-beam 125a' is provided instead of the first cross-beam 125a of FIG. 3. The battery cell assemblies 120‴ are substantially the same as the battery cell assembly 120' of FIG. 1 except that the first cross-beam 125a' is provided instead of the first cross-beam 125a of FIG. 3.

The first cross-beam 125a' of each of the battery cell assemblies 120" and 120‴ may include vertical ribs P1a and P2a and horizontal ribs R1a', R2a', R3a', and R4a'. The first cross-beam 125a' of each of the battery cell assemblies 120" and 120‴ may include assembly windows 125aW. Accordingly, each of the horizontal ribs R1a', R2a', R3a' and R4a' may include windows R1aW, R2aW, R3aW and R4aW that overlap each other, and the overlapping of the windows R1a', R2a', R3a' and R4a' may the assembly windows 125aW.

The assembly windows 125aW of the first cross-beams 125a' may overlap corresponding one of the assembly windows 125bW of second cross-beams 125b. Accordingly, the assembly windows 125aW of the first cross-beams 125a' may expose corresponding one of guides 125G. Accordingly, after the mounting of the battery cell assemblies 120" and 120‴ is completed, the quality of an assembly process may be inspected using a vision machine or the like.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing including a base plate and a guide protruding from the base plate; and
first and second battery cell assemblies on the base plate,
wherein each of the first and second battery cell assemblies includes a cell stack including a plurality of battery cells and first and second cross-beams coupled to the cell stack, and
the second cross-beam of the first battery cell assembly includes a second assembly window for exposing the guide.

2. The battery pack of claim 1, wherein the first cross-beam of the second battery cell assembly is coupled to the second cross-beam of the first battery cell assembly.

3. The battery pack of claim 2, wherein the first cross-beam of the second battery cell assembly covers the guide.

4. The battery pack of claim 2, wherein the first cross-beam of the second battery cell assembly includes a first assembly window for exposing the guide.

5. The battery pack of claim 4, wherein the first assembly window of the first cross-beam of the second battery cell assembly overlaps the second assembly window of the second cross-beam of the first battery cell assembly.

6. The battery pack of claim 1, wherein the first cross-beam of each of the first and second battery cell assemblies includes a first step structure, and
the second cross-beam of each of the first and second battery cell assemblies includes a second step structure,
wherein a height of the second step structure is greater than a height of the guide.

7. The battery pack of claim 1, wherein the second cross-beam of each of the first and second battery cell assemblies further includes bolting holes,
wherein a shape of the bolting holes is the same as a shape of the second assembly window.

8. The battery pack of claim 1, wherein the second cross-beam of each of the first and second battery cell assemblies further includes bolting holes,
wherein a shape of the bolting holes is different from a shape of the second assembly window.

9. The battery pack of claim 8, wherein a diameter of the bolting holes is different from a diameter of the second assembly window.

10. A battery pack comprising:
a pack housing including a base plate and guides protruding from the base plate; and
a battery cell assembly on the base plate,
wherein the battery cell assembly includes a cell stack including a plurality of battery cells and first and second cross-beams coupled to the cell stack,
the first cross-beam includes first and second vertical ribs and first and second horizontal ribs between the first and second vertical ribs,
the second cross-beam includes third and fourth vertical ribs and third and fourth horizontal ribs between the third and fourth vertical ribs,
the third horizontal rib includes a third window for exposing a corresponding one of the guides, and
the fourth horizontal rib includes a fourth window penetrated by a corresponding one of the guides.

11. The battery pack of claim 10, wherein the first cross-beam covers the guides.

12. The battery pack of claim 10, wherein the first horizontal rib of the first cross-beam includes a first window for exposing a corresponding one of the guides, and
the second horizontal rib of the first cross-beam includes a second window for exposing a corresponding one of the guides.
